# FASCICULE DE BREVET EUROPEEN

(11) **EP 2 736 735 B1**
(45) Date de publication et mention de la délivrance du brevet: **23.09.2015**
(21) Numéro de dépôt: 12742879.5
(22) Date de dépôt: 26.07.2012
(51) Int. Cl.: B60C 11/11, B60C 11/12

(54) **SCULPTURE POUR PNEUS DE VÉHICULE DE GENIE CIVIL**
LAUFFLÄCHENSTRUKTUR FÜR REIFEN EINES HOCH- UND TIEFBAUFAHRZEUGS
TREAD PATTERN FOR TIRES FOR A CIVIL ENGINEERING VEHICLE

(30) Priorité: 28.07.2011 FR 1156931
(43) Date de publication de la demande: 04.06.2014
(73) Titulaire: Compagnie Générale des Etablissements Michelin, 63000 Clermont-Ferrand (FR); Michelin Recherche et Technique S.A., 1763 Granges-Paccot (CH)
(72) Inventeur: CHAUVIN, Dominique, F-63040 Clermont-Ferrand Cedex 9 (FR)
(74) Mandataire: Diernaz, Christian
(86) Numéro de dépôt international: PCT/EP2012/064741
(87) Numéro de publication internationale: WO 2013/014253

(56) Documents cités:
- EP-A1- 1 759 890
- EP-A1- 1 834 813
- JP-A- 62 292 509

## Description

### DOMAINE DE L'INVENTION

La présente invention concerne les pneus pour gros tombereaux de chantier ("*Dumper*" en anglais), ces pneus pouvant porter une charge pouvant aller jusque 100 tonnes, ces pneus étant gonflés à une pression au moins égale à 6 bars.

### ÉTAT DE LA TECHNIQUE

Un pneumatique connu est divulgué dans le document EP-A-175 9890.

Il est connu de pourvoir un pneu destiné à équiper un véhicule de travaux de génie civil d'une bande de roulement dont la surface de roulement est pourvue d'une sculpture formée par une pluralité de rainures délimitant des éléments de relief (blocs, nervures) de façon à générer des arêtes de matière ainsi que des creux. Ces rainures représentent un volume de creux qui - rapporté au volume total de la bande - incluant à la fois le volume de matière et celui de toutes les rainures et tous les creux - s'exprime par un pourcentage (désigné ici par "taux de creux volumique"). Un taux de creux volumique égal à zéro indique une bande de roulement sans rainure ni creux.

Par ailleurs, les pneus sont pourvus d'une armature de carcasse surmontée radialement à l'extérieur par une armature de sommet afin de réaliser un frettage de ladite armature de carcasse. L'armature de sommet est en général formée par un empilement d'une pluralité de nappes de renforts, ces renforts faisant avec la direction circonférentielle des angles généralement non nuls.

Dans l'état de la technique, il est connu que les sculptures pour bandes de roulement de pneus équipant les véhicules de type "dumper" - ces véhicules utilisant des pneus d'un diamètre compris entre 2.5m et 4 m - présentent les particularités dimensionnelles suivantes :

- Une profondeur moyenne de rainure au moins égale à 65 mm et au plus égale à 100 mm.

- Un taux moyen de creux volumique sur l'ensemble de la bande de roulement de l'ordre de 30 % (c'est-à-dire au moins 30% et au plus 40 %) ;

- Une partie centrale de bande de roulement faiblement rainurée, c'est-à-dire dont le taux de creux volumique est inférieur à 10%, cette partie centrale s'étendant de part et d'autre du plan équatorial sur une largeur totale au moins égale à 40 % et au plus 60 % de la largeur totale de la bande de roulement ;

Des parties de bord situées de part et d'autre de la partie centrale, ces parties de bord ayant un taux de creux volumique de l'ordre de 40% (c'est-à-dire au moins 35 % et au plus 44 %), ces parties de bords comprenant une pluralité de blocs séparés les uns des autres par des rainures d'orientation générale transversale.

### Définitions :

Une découpure ("cut out" en anglais) désigne dans cette description soit une rainure soit une incision et correspond à l'espace délimité par des parois de matière se faisant face et distantes l'une de l'autre d'une distance non nulle. Ce qui différencie une incision d'une rainure c'est précisément la valeur de cette distance ; dans le cas d'une incision, cette distance est appropriée pour permettre la mise en contact au moins partielle des parois opposées lors du passage dans le contact avec la chaussée dans les conditions usuelles de roulage. Dans le cas d'une rainure, les parois de cette rainure ne peuvent venir en contact l'une contre l'autre dans les conditions usuelles de roulage.

Le taux de creux surfacique d'une sculpture est égal au rapport entre la surface des creux (essentiellement formés par des rainures) délimités par les éléments de relief (blocs, nervures) et la surface totale (surface de contact des éléments de relief et surface des creux). Un taux de creux surfacique faible indique une grande surface de contact de la bande de roulement et une faible surface de creux entre les éléments de relief.

Le taux de creux volumique ("void ratio" en anglais) d'une sculpture d'une bande de roulement à l'état neuf est égal au rapport entre le volume des creux (essentiellement formés par des rainures et les incisions) et le volume total (volume de la bande de roulement incluant le volume des éléments de relief et le volume total des creux).

Un bloc est un élément en relief formé sur une bande de roulement, cet élément étant délimité par des découpures et comprenant des parois latérales et une face de contact, cette dernière étant destinée à venir en contact avec la chaussée pendant le roulage.

Une nervure est un élément en relief formé sur une bande de roulement, cet élément étant délimité par deux découpures. Une nervure comprend deux parois latérales et une face de contact, cette dernière étant destinée à venir en contact avec la chaussée.

Par direction radiale, on entend une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Par plan équatorial, on désigne le plan perpendiculaire à l'axe de rotation du pneu, ce plan passant par les points du pneu radialement les plus à l'extérieur, ce plan divisant le pneu en deux moitiés égales ou sensiblement égales.

Les conditions d'utilisation du pneu telles que définies par la norme E.T.R.T.O. précisent la pression de gonflage de référence correspondant à la capacité de charge du pneu indiquée par son indice de charge et son code vitesse. Ces conditions d'utilisation peuvent être dites conditions nominales ou conditions d'usage.

### BREF EXPOSÉ DE L'INVENTION

On observe que les sculptures des bandes de roulement de l'art antérieur génèrent en roulage, sous des charges par pneu supérieures à ou égales à 20 tonnes et des pressions de gonflage au moins égales à 6 bars, un échauffement de la bande de roulement et une élévation de la température de l'armature sommet du pneu, cette élévation de température pouvant notamment conduire à une réduction de l'endurance du pneu. On peut, par exemple, observer sous certaines conditions, une séparation entre les nappes de l'armature de sommet et une dégradation des propriétés du matériau caoutchouc enrobant les renforts de ces nappes.

Il a été exprimé le besoin d'avoir des sculptures de bande de roulement qui réduisent l'échauffement tout en conservant les propriétés indispensables aux besoins en usage sous conditions telles que rappelées précédemment. À cet effet, l'invention a pour objet une bande de roulement pour pneu destiné à équiper un véhicule de travaux de génie civil ("dumper") telle que définie dans la revendication 1. Ledit pneu est destiné à porter une charge au moins égale à 20 tonnes et gonflé à au moins 6 bars, ce pneu étant pourvu d'une armature de carcasse surmontée radialement à l'extérieur par une armature de sommet, cette armature de sommet étant formée par un empilement d'une pluralité de nappes de renforts, ces renforts faisant avec la direction circonférentielle des angles non nuls. La bande de roulement de ce pneu comprend une pluralité de découpures délimitant des éléments de relief pour former une sculpture, selon laquelle
- la bande de roulement comprend une partie centrale de largeur comprise entre 40 et 60 % de la largeur totale de la bande roulement et des parties de bord de part et d'autre de cette partie centrale, ladite partie centrale étant délimitée axialement par des incisions d'orientation générale circonférentielle, ces incisions ayant une profondeur et une largeur appropriées pour qu'elles se ferment au passage dans le contact ;
- la partie centrale étant pourvue d'une pluralité d'incisions d'orientation générale transversale s'ouvrant dans les incisions circonférentielles délimitant la partie centrale, ces incisions d'orientation générale transversale délimitant des rangées d'éléments disposées circonférentiellement et étant aptes à se fermer au passage dans le contact ;
- chaque partie de bord comprend une pluralité de rainures d'orientation générale transversale délimitant une pluralité d'éléments de relief, le nombre d'éléments de relief de chaque partie de bord étant égal au nombre d'éléments de relief de la partie centrale, ce nombre d'éléments étant au moins égal à 45 et au plus égal à 49. Le nombre d'éléments de relief est compté comme le nombre d'éléments se suivant dans la direction circonférentielle et cela qu'elle que soit la partie de la bande considérée.

En outre, cette bande de roulement a un taux moyen global de creux volumique au plus égal à 19%, le taux moyen global de creux volumique correspondant au ratio entre le volume de tous les creux présents s'ouvrant à l'état neuf sur la surface de roulement de la bande et le volume total de ladite bande.

Avantageusement, le taux global de creux volumique de la partie centrale est au plus égal à 15%.

Avantageusernent, lesdits éléments ont une même dimension circonférentielle ou sensiblement la même dimension circonférentielle.

Préférentiellement, le taux de creux volumique de la partie centrale est au plus égal à 10% et celui de chaque partie bord est au plus égal à 30 %, ledit taux de creux volumique de chaque partie bord étant supérieur au taux moyen de creux volumique de la partie centrale. Le taux de creux volumique d'une partie de bande de roulement correspond au ratio entre le volume de tous les creux présents à l'état neuf sur cette partie de bande et le volume total de ladite partie de bande (incluant ledit volume de tous les creux).

Les creux de la sculpture dans la partie centrale de la bande de roulement sont formés par des incisions, ces incisions présentant la particularité de pouvoir se fermer au passage dans le contact avec une chaussée et s'ouvrir hors du contact afin d'assurer une ventilation des éléments de relief. La fermeture des incisions est conditionnée par leur largeur, le module de compression du matériau de la bande de roulement ainsi que les conditions de charge et de pression du pneu. La largeur des incisions est choisie de façon que cette largeur soit égale à au moins 3 % et au plus à 5 % de la longueur moyenne mesurée dans la direction circonférentielle de l'élément de relief de la partie centrale. Par fermeture des incisions, on entend ici que les parois délimitant ces incisions se rapprochent l'une de l'autre lors du passage dans le contact avec la chaussée afin d'être au moins partiellement en contact l'une sur l'autre.

Grâce à la sculpture selon l'invention il est possible de réduire de façon significative l'échauffement des matériaux constituant le pneu dans chaque partie dudit pneu tout en conservant un niveau élevé de performances.

Pour augmenter encore cet effet de réduction de l'échauffement, il est judicieux de pourvoir la partie centrale avec au moins une incision d'orientation générale circonférentielle, cette incision ayant une profondeur égale ou proche de la profondeur des incisions délimitant axialement la partie centrale.

Préférentiellement, les renforts de l'armature de carcasse sont disposés de manière à être orientés radialement c'est-à-dire à faire un angle égal ou proche de 90 degrés avec la direction circonférentielle.

Grâce à une bande de roulement selon l'invention, la ventilation de la bande de roulement est rendue beaucoup plus efficace qu'avec des sculptures de bandes de roulement de l'art antérieur et cela grâce à la présence d'un plus grand nombre de zones de ventilation uniformément réparties formées par les multiples incisions de la partie centrale et la présence d'un plus grand nombre d'éléments de relief sur cette même partie centrale. En conséquence, l'échauffement de la structure est diminué, ce qui permet une plus grande endurance et des vitesses de roulage plus élevées, facteur particulièrement intéressant pour ce type de pneu d'engins de travaux. Cette conception de sculpture autorise à l'état neuf une augmentation du volume de gomme à user et donc une augmentation de la durée de vie du produit. En outre, grâce à la fermeture des incisions, il est possible de maintenir une rigidité appropriée à la partie de la bande entrant en contact avec une chaussée, cette rigidité étant proche de celle d'une bande de roulement quasiment dépourvue de découpures.

Un taux de creux limité à 17 % conduit nécessairement à moins de pression de contact au sol pour des conditions de charge et de pression similaires et par conséquent à moins de sources thermiques - comparativement à un pneu de l'art antérieur, ce qui est essentiel pour des bandes de roulement de fort volume de matière comme c'est précisément le cas pour des bandes de roulement destinées à des pneus de véhicules de génie civil.

Préférentiellement et afin de limiter les déformations de flexion des blocs, ceux-ci ont des dimensions (longueur, largeur) en surface au moins égales à deux fois leur hauteur, ce qui réduit sensiblement les déformations de flexion desdits blocs au passage dans le contact avec le sol. Les dimensions dont il est fait état sont mesurées dans les directions circonférentielle et transversale.

En outre, ces dimensions des blocs sont au plus égales à deux fois et demi leur hauteur. Grâce à ce domaine spécifique de valeurs (supérieures à deux fois la hauteur et inférieures à deux fois et demi la même hauteur), les blocs sont plutôt sollicités en cisaillement et présentent une résistance thermique plus faible, ce qui leur permet d'évacuer plus facilement encore les calories produites dans les conditions de roulage sévères au coeur des motifs.

Il est à noter que la réduction du niveau thermique dans la bande de roulement permet de réduire dans les mêmes proportions le niveau thermique dans l'armature de sommet, ce qui est bien entendu favorable d'un point de vue endurance de cette armature. Ceci permet d'augmenter sensiblement la durée d'utilisation d'un pneu pourvu d'une telle bande de roulement en conditions d'utilisation telles que précisées précédemment.

La sculpture selon l'invention permet de mettre un volume de matière à user plus important comparativement aux pneus de même catégorie et même usage de l'art antérieur et ainsi d'augmenter la performance en usure d'au moins 10% (à même kilométrage d'utilisation, la perte de matière par usure est inférieur d'au moins 10% à ce qui était obtenu avec une bande de roulement selon l'art antérieur.

D'autres caractéristiques et avantages de l'invention ressortent de la description faite ci-après en référence aux dessins annexés qui montrent, à titre d'exemples non limitatifs, des variantes de réalisation de l'objet de l'invention.

### BRÈVE DESCRIPTION DES FIGURES

La figure 1 montre une vue de la surface d'une première variante d'une bande de roulement qui ne diffère de l'invention que par le nombre d'éléments de relief;
La figure 2 montre une deuxième variante de dessin de sculpture d'une bande de roulement selon l'invention.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

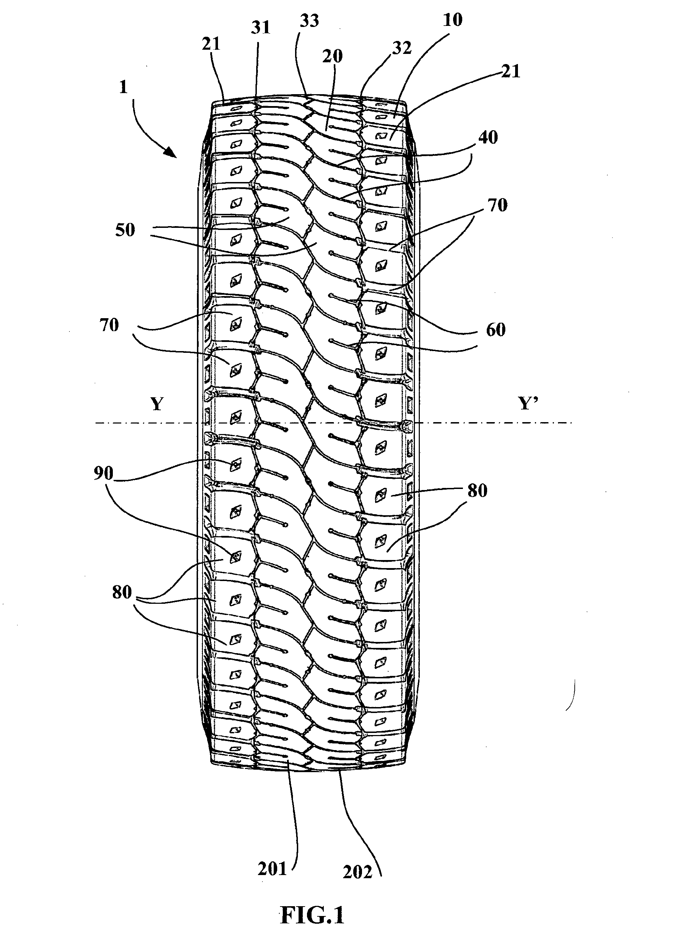

La figure 1 montre un pneu 1 de dimension 40.00 R57 comportant une bande de roulement 10 selon une première variante qui ne diffère de l'invention que par le nombre d'éléments de relief. Ce pneu est destiné à équiper un véhicule de type "dumper". Le diamètre extérieur mesuré sur le plan équatorial (plan perpendiculaire à l'axe de rotation passant par les points radialement les plus à l'extérieur de la bande de roulement) pour ce pneu est égal à 3500 mm.

Ce pneu comprend une armature de carcasse radiale c'est-à-dire dont les renforts sont orientés de façon à faire un angle égal ou proche de 90 degrés avec une direction circonférentielle.

Ce pneu comprend en outre radialement à l'extérieur de l'armature de carcasse, une armature de sommet formé par un empilement de cinq nappes, chaque nappe comportant des renforts disposés selon des directions différentes de la direction circonférentielle et qui sont croisés d'une nappe à la nappe adjacente. Cette armature de sommet est elle-même surmontée par une bande de roulement d'épaisseur moyenne E dans le cas présent égale à 130 mm).

La bande de roulement 10 est divisée dans la direction transversale ou axiale (c'est-à-dire dans une direction YY' parallèle à l'axe de rotation du pneu) en une partie centrale 20 - délimitée axialement par deux incisions circonférentielles 31, 32 - et des parties de bord 21 situées de part et d'autre de la partie centrale 20. Les incisions d'orientation générale circonférentielle 31, 32 délimitant la partie centrale ont une largeur moyenne égale à 10 mm et une profondeur moyenne égale à 100 mm. Ces incisions sont aptes à se fermer au passage dans le contact avec le sol et à s'ouvrir en dehors de manière à permettre à la fois une rigidité appropriée de la partie centrale dans le contact et une ventilation adaptée en dehors du contact.

La partie centrale 20 a une largeur de 525 mm, représentant 55% de la largeur totale de la bande roulement 10 qui est ici égale à 950 mm.

En outre, la partie centrale 20 est pourvue d'une incision 33 d'orientation générale circonférentielle en zigzag et d'une pluralité d'incisions 40 d'orientation générale transversale ; les incisions circonférentielle 31, 32, 33 et transversales 40 ont une profondeur moyenne de 100 mm et une largeur moyenne de 10 mm. Les incisions transversales 40 s'étendent sur l'ensemble de la largeur de la partie centrale pour s'ouvrir dans les incisions circonférentielles 31, 32 délimitant ladite partie centrale 20.

Ces incisions découpent une pluralité de blocs 50 disposés selon deux rangées circonférentielles 201, 202. En outre, chaque bloc 50 est pourvu d'une incision transversale 60 ne débouchant que sur un côté des blocs 50.

Chaque partie de bord 21 comprend une pluralité de rainures 70 d'orientation générale transversale de largeur moyenne égale à 50 mm et de profondeur moyenne égale à 100 mm. Ces rainures transversales 70 sont positionnées dans le prolongement des incisions transversales 40 de la partie centrale. Ces rainures transversales délimitent une pluralité de blocs 80 dont la longueur circonférentielle moyenne est sensiblement égale à la longueur moyenne circonférentielle des blocs de la partie centrale.

Sur un tour de roue, le nombre total de blocs 50, 80 respectivement dans la partie centrale 20 et dans chacune des parties de bord 21 est égal à 44.

Cette bande de roulement a un taux global de creux volumique (calculé dans toute l'épaisseur E de ladite bande) dans le cas présent égal à 18.75 %.

Par ailleurs, le taux de creux volumique de la partie centrale 20 est ici de 8 %, tandis que le taux de creux volumique de chaque partie bord 21 est de 22 %.

Sur chaque partie de bord 21, il est en outre prévu la présence de cavités 90 de profondeur égale à 40 mm et ayant un volume de l'ordre de 62 cm³. Ces cavités augmentent la ventilation des parties de bord. Il est à noter qu'elles pourraient être omises, les taux de creux choisis pour la partie centrale et pour les parties de bord étant suffisants pour assurer un meilleur fonctionnement mécanique et thermique des blocs.

Dans l'exemple décrit, la dimension minimale des blocs dans la direction longitudinale est supérieure à la profondeur des rainures - dans le cas présent cette dimension minimale est égale à 200 mm, afin de limiter l'apparition d'usures irrégulières, c'est-à-dire d'usures qui seraient localisées sur certaines parties de la bande de roulement et non d'usures réparties de façon homogène sur toute la surface de roulement de la bande de roulement.

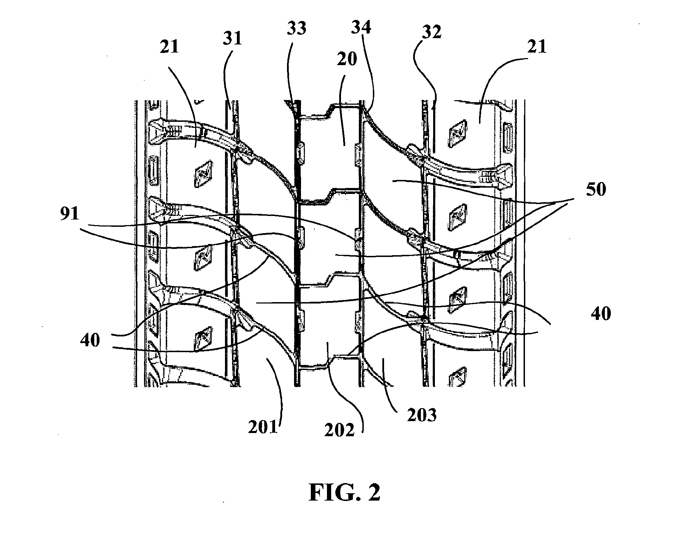

La figure 2 montre une autre variante de dessin de sculpture d'une bande de roulement selon l'invention.

Selon cette variante, la partie centrale 20 est délimitée axialement à l'extérieur par des incisions circonférentielles 31, 32. Cette même partie centrale 20 comprend deux incisions additionnelles circonférentielles 33, 34 rectilignes pour délimiter trois rangées 201, 202, 203. Les incisions additionnelles circonférentielles 33, 34 traversent une pluralité de cavités 91 destinées à augmenter la ventilation de la partie centrale.

En outre, chacune de ces rangées est pourvue d'une pluralité d'incisions 40 orientées transversalement pour délimiter une pluralité de blocs 50.

Cette deuxième variante de l'invention présente un taux de creux volumique global sur la bande de roulement égal à 15%. Le taux de creux de la partie centrale est ici de 10%.

Sur un tour de roue, le nombre total d'éléments de relief dans la partie centrale et dans chacun des parties de bord est égal à 45.

L'invention ayant été décrite de manière générale et au moyen de deux variantes, il doit être compris que cette invention n'est pas limitée à ces seules variantes. Il est clair que diverses modifications peuvent y être apportées sans sortir du cadre général de la présente invention. Notamment, les cavités prévues sur les blocs des parties de bord dans ces deux variantes peuvent être absentes afin de mettre davantage de matière en contact avec le sol.

## Revendications

1. Bande de roulement pour pneu de travaux de génie civil, cette bande de roulement (10) ayant une surface de roulement destinée à venir en contact avec un sol pendant le roulage, cette bande de roulement (10) comprenant une pluralité de découpures délimitant des éléments de relief pour former une sculpture sur la surface de roulement et étant telle qu'elle comprend une partie centrale (20) de largeur comprise entre 40 et 60 % de la largeur totale de la bande roulement et des parties de bord (21) de part et d'autre de cette partie centrale, ladite partie centrale (20) étant délimitée axialement par des incisions (31, 32) d'orientation générale circonférentielle, ces incisions ayant une profondeur et une largeur appropriées pour qu'elles puissent se fermer au passage dans le contact, la partie centrale (20) étant pourvue d'une pluralité d'incisions d'orientation générale transversale (40) s'ouvrant dans les incisions circonférentielles (31, 32) délimitant la partie centrale (20), ces incisions d'orientation générale transversale délimitant des rangées d'éléments disposées circonférentiellement et étant aptes à se fermer au passage dans le contact, cette bande de roulement étant telle que :
- chaque partie de bord (21) comprend une pluralité de rainures d'orientation générale transversale (70) délimitant une pluralité d'éléments de relief (80), le nombre d'éléments de relief (80) de chaque partie de bord, compté dans la direction circonférentielle, étant égal au nombre d'éléments de relief (50) de la partie centrale, et cette bande de roulement a un taux moyen global de creux volumique au plus égal à 19%, le taux moyen global de creux volumique correspondant au ratio entre le volume de tous les creux s'ouvrant à l'état neuf sur la surface de roulement de la bande et le volume total de ladite bande,
cette bande de roulement étant **caractérisée en ce que** :
- le nombre d'éléments est au moins égal à 45 et au plus égal à 49, et **en ce que**
- les éléments de relief de la bande de roulement ont des dimensions en surface au moins égales à deux fois leur hauteur et au plus égales à deux fois et demi leur hauteur, cette hauteur étant mesurée comme la profondeur moyenne des incisions délimitant les éléments de relief

2. Bande de roulement selon la revendication 1 **caractérisée en ce que** le taux global de creux volumique est au plus égal à 15%.

3. Bande de roulement selon l'une quelconque des revendications 1 à 2 **caractérisée en ce que** le taux de creux volumique de la partie centrale (20) est au plus égal à 10% et celui de chaque partie bord (21) est au plus égal à 30 %, ledit taux de creux volumique de chaque partie bord (21) étant supérieur au taux de creux volumique de la partie centrale (20).

4. Bande de roulement selon l'une quelconque des revendications 1 à 3 **caractérisée en ce que** la partie centrale comprend en outre au moins une incision d'orientation générale circonférentielle, cette incision ayant une profondeur égale ou proche de la profondeur des incisions délimitant axialement la partie centrale.

5. Bande de roulement selon l'une quelconque des revendications 1 à 4 **caractérisée en ce que** la largeur des incisions de la partie centrale de la bande est égale à au moins 3 % et au plus à 5 % de la longueur moyenne, mesurée dans la direction circonférentielle, de chaque élément de relief de la partie centrale.

6. Pneu destiné à l'équipement d'un véhicule de travaux de génie civil, ce pneu étant **caractérisé en ce qu'**il est pourvu d'une bande de roulement selon l'une quelconque des revendications 1 à 5.

## Patentansprüche

1. Lauffläche für Reifen für Hoch- und Tiefbauarbeiten, wobei diese Lauffläche (10) eine Laufoberfläche hat, die dazu bestimmt ist, mit einem Boden während des Fahrens in Berührung zu kommen, wobei diese Lauffläche (10) mehrere Ausschnitte umfasst, die Reliefelemente abgrenzen, um eine Struktur auf der Lauffläche zu bilden, und derart ist, dass sie einen zentralen Teil (20) mit Breite zwischen 40 und 60% der Gesamtbreite der Lauffläche umfasst, und Randteile (21) auf jeder Seite dieses zentralen Teils, wobei der zentrale Teil (20) axial durch Einschnitte (31, 32) mit allgemein umfänglicher Ausrichtung abgegrenzt ist, wobei diese Einschnitte eine Tiefe und eine Breite haben, die geeignet sind, damit sie sich bei der Passage in dem Kontakt schließen können, wobei der zentrale Teil (20) mit mehreren Einschnitten mit allgemeiner Querausrichtung (40) versehen ist, die sich in den umfänglichen Einschnitten (31, 32), die den zentralen Teil (20) abgrenzen, öffnen, wobei diese Einschnitte mit allgemeiner Querausrichtung Reihen von Elementen abgrenzen, die umfänglich angeordnet und geeignet sind, sich bei der Passage in dem Kontakt zu schließen, wobei die Lauffläche derart ist, dass:
- jeder Randteil (21) mehrere Rillen mit allgemeiner Querausrichtung (70) umfasst, die mehrere Reliefelemente (80) abgrenzen, wobei die Anzahl von Reliefelementen (80) jedes Randteils in die Umfangsrichtung gezählt gleich der Anzahl Reliefelemente (50) des zentralen Teils ist, und diese Lauffläche eine globale mittlere Volumenrate an Vertiefungen mindestens gleich 19% hat, wobei die globale mittlere Volumenrate an Vertiefungen dem Verhältnis zwischen dem Volumen aller Vertiefungen entspricht, die sich im neuen Zustand auf der Laufoberfläche der Lauffläche und dem Gesamtvolumen der Lauffläche öffnen,
wobei die Lauffläche **dadurch gekennzeichnet ist, dass**
- die Anzahl von Elementen mindestens gleich 45 und höchstens gleich 49 ist, und dass
- die Reliefelemente der Lauffläche auf der Oberfläche Maße mindestens gleich zwei Mal ihrer Höhe und höchstens gleich zweieinhalb Mal ihrer Höhe haben, wobei diese Höhe als die mittlere Tiefe der Einschnitte, die die Reliefelemente abgrenzen, gemessen wird.

2. Lauffläche nach Anspruch 1, **dadurch gekennzeichnet, dass** die Gesamtrate von Vertiefungsvolumen höchstens gleich 15% ist.

3. Lauffläche nach einem der Ansprüche 1 bis 2, **dadurch gekennzeichnet, dass** die Volumenrate an Vertiefungen des zentralen Teils (20) höchstens gleich 10% ist und die jedes Randteils (21) höchstens gleich 30% ist, wobei die Volumenrate an Vertiefungen jedes Anteils (21) größer ist als die Volumenrate an Vertiefungen des zentralen Teils (20).

4. Lauffläche nach einem der Ansprüche 1 bis 3, **dadurch gekennzeichnet, dass** der zentrale Teil außerdem mindestens einen Einschnitt mit allgemein umfänglicher Ausrichtung umfasst, wobei dieser Einschnitt eine Tiefe gleich oder nahe der Tiefe der Einschnitte hat, die den zentralen Teil axial abgrenzen.

5. Lauffläche nach einem der Ansprüche 1 bis 4, **dadurch gekennzeichnet, dass** die Breite der Einschnitte des zentralen Teils der Lauffläche gleich mindestens 3% und höchstens 5% der mittleren Menge gemessen in der Umfangsrichtung jedes Reliefelements des zentralen Teils ist.

6. Reifen, der zum Ausstatten eines Fahrzeugs für Hoch- und Tiefbauarbeiten bestimmt ist, wobei dieser Reifen **dadurch gekennzeichnet ist, dass** er mit einer Lauffläche nach einem der Ansprüche 1 bis 5 versehen ist.

## Claims

1. Tread for a tyre for civil engineering works, this tyre being provided with a carcass reinforcement which is surmounted radially at the outer side by an upper reinforcement, this upper reinforcement being formed by a stack of a plurality of reinforcement sheets, these reinforcements forming with the circumferential direction angles which are not equal to zero, this tyre comprising a tread (10) which has a travel surface which is intended to move into contact with the ground during travel, this tread (10) comprising a plurality of cutouts which delimit relief elements in order to form a tread pattern on the travel surface and being such that it comprises a central portion (20) having a width between 40 and 60% of the total width of the tread and the edge portions (21) at one side and the other of this central portion, the central portion (20) being delimited axially by generally circumferentially orientated incisions (31, 32), these incisions having a depth and a width which are appropriate so that they can close when they move into contact, the central portion (20) being provided with a plurality of generally transversely orientated incisions (40) which open in the circumferential incisions (31, 32) which delimit the central portion (20), these generally transversely orientated incisions delimiting rows of elements which are arranged circumferentially and being capable of closing when they move into contact, this tread being such that:
- each edge portion (21) comprises a plurality of generally transversely orientated grooves (70) which delimit a plurality of relief elements (80), the number of relief elements (80) of each edge portion, counted in the circumferential direction, being equal to the number of relief elements (50) of the central portion, and this tread has a total mean void ratio of a maximum of 19%, the total mean void ratio corresponding to the ratio between the volume of all the hollow portions present which in the new state open at the travel surface of the tread and the total volume of the tread, this tread being **characterised in that**:
the number of elements is at least 45 and a maximum of 49, and the relief elements of the tread have surface dimensions which are at least equal to two times their height and less than two and a half times their height, this height being measured as the mean depth of the incisions which delimit the relief elements.

2. Tread according to Claim 1, **characterised in that** the total void ratio is a maximum of 15%.

3. Tread according to Claim 1 or Claim 2, **characterised in that** the void ratio of the central portion (20) is a maximum of 10% and that of each edge portion (21) is a maximum of 30%, the void ratio of each edge portion (21) being greater than the void ratio of the central portion (20).

4. Tread according to any one of Claims 1 to 3, **characterised in that** the central portion further comprises at least one generally circumferentially orientated incision, this incision having a depth equal to or similar to the depth of the incisions which axially delimit the central portion.

5. Tread according to any one of Claims 1 to 4, **characterised in that** the width of the incisions of the central portion of the tread is at least 3% and a maximum of 5% of the mean length, measured in the circumferential direction, of each relief element of the central portion.

6. Tyre which is intended to be provided on a vehicle for civil engineering works, this tyre being **characterised in that** it is provided with a tread according to any one of Claims 1 to 5.
